# EUROPÄISCHE PATENTSCHRIFT

(11) **EP 0 314 907 B1**
(45) Veröffentlichungstag und Bekanntmachung des Hinweises auf die Patenterteilung: **30.11.1994**
(21) Anmeldenummer: 88115105.4
(22) Anmeldetag: 15.09.1988
(51) Int. Cl.: C08L 101/00, C08L 23/06, B29C 61/06

(54) **Wärmeschrumpfbarer Gegenstand**
Heat shrinkable article
Article rétractable à chaud

(30) Priorität: 31.10.1987 DE 3737005; 31.10.1987 DE 3737004
(43) Veröffentlichungstag der Anmeldung: 10.05.1989
(73) Patentinhaber: kabelmetal electro GmbH, 30002 Hannover (DE)
(72) Erfinder: Marx, Karl-Heinz, D-3008 Garbsen 9 (DE)

(56) Entgegenhaltungen:
- EP-A- 0 116 393
- DD-A- 227 380
- DE-A- 3 620 321
- GB-A- 2 072 683

## Beschreibung

Die Erfindung betrifft einen wärmeschrumpfbaren Gegenstand zum Umhüllen eines Substrates, enthaltend Elemente aus einem vernetzten Polymeren, der durch Erwärmen des Gegenstandes über den Kristallitschmelzpunkt des vernetzten Polymeren, Recken bei dieser Temperatur und Abkühlen im gereckten Zustand hergestellt ist.

Wärmeschrumpfende Gegenstände finden Verwendung für die Umhüllung von langgestreckten Gegenständen, um diese z. B. gegen Witterungseinflüsse von außen abzudichten. Ein häufiges Anwendungsgebiet ist die Umhüllung von Verbindungsstellen elektrischer Kabel. Für diesen Anwendungszweck ist eine Manschette aus wärmeschrumpfendem Kunststoff entwickelt worden, welche aus einem Band mit an zwei Längskanten angeordneten Stegen besteht. Nach dem Herumlegen der Manschette um den Kabelspleiß wird eine Verschlußschiene über die Stege geschoben, so daß die Manschette den Kabelspleiß in Form eines Rohres umgibt (DE-C3-15 25 815). Die Manschette weist an ihrer dem Kabelspleiß zugekehrten Oberfläche eine Kleberbeschichtung auf, die beim Schrumpferwärmen plastisch wird und während des Schrumpfvorgangs die Hohlräume zwischen der Manschette und dem Kabelspleiß und den Kabelmänteln ausfüllt. Der Kabelspleiß wird häufig noch durch einen sogenannten Liner umhüllt, welcher aus einem zum Rohr geformten Band besteht. Durch besonders gestaltete Endbereiche des Liners ergibt sich ein allmählicher Übergang von dem relativ großen Durchmesser des Kabelspleißes zu den Kabelmänteln (DE-A1-23 45 326).

Durch innere Spannungen, durch mechanische Einflüsse aber auch durch unsachgemäßes vorgehen beim Wärmeschrumpfen, in dem z. B. die Manschette örtlich überhitzt wird, kann es zu einer Rißbildung der Manschette kommen, wodurch diese unbrauchbar wird. Auch eine oberflächliche Beschädigung der Manschette kann dazu führen, daß diese beim Wärmeschrumpfen einreißt.

In der EP-A-0 116 393 wird ein wärmeschrumpfender Gegenstand vorgeschlagen, welcher aus einem Gewebe besteht, dessen Schrumpfeigenschaft durch in Schrumpfrichtung verlaufende wärmeschrumpfende Fäden erreicht wird. Quer zur Schrumpfrichtung verlaufen Fäden aus nicht schrumpfendem hochfestem Werkstoff. Das Gewebe ist an seiner dem zu umhüllenden Substrat abgekehrten Oberfläche mit einem Polymermaterial und an seiner dem Substrat zugekehrten Oberfläche mit einem wärmeaktivierbaren Kleber beschichtet. Da das Herstellen der wärmeschrumpfbaren Fäden und deren Verwebung mit den hochfesten Fäden ein aufwendiger Arbeitsgang ist, ist ein solcher Gegenstand nicht wirtschaftlich. Darüberhinaus besteht die Gefahr, daß die dem Substrat zugekehrte wärmeaktivierbare Schicht, die bei Schrumpftemperatur zähflüssig wird, bei größeren Maschenweiten beim Schrumpfen durch die Maschen des Gewebes nach außen gepreßt wird. Ein weiterer wesentlicher Nachteil ist, daß bei Durchtrennung oder Abriß von mehreren wärmeschrumpfbaren Fäden das Gewebe seine Schrumpfeigenschaft weitestgehend einbüßt.

Der vorliegenden Erfindung liegt die Aufgabe zugrunde, einen wärmeschrumpfbaren Gegenstand anzugeben, der gegen Überhitzung und mechanische Beschädigungen wesentlich unempfindlicher ist und der sich wesentlich wirtschaftlicher herstellen läßt.

Diese Aufgabe wird bei einem Gegenstand der eingangs erwähnten Art dadurch gelöst, daß nach einer ersten Alternative das vernetzte Polymer in Form von Partikeln als Füllstoff in einem thermoplastischen Kunststoff vorliegt oder nach einer zweiten Alternative der Gegenstand an seiner dem Substrat abgekehrten Oberfläche eine Schicht aus einem Thermoplasten aufweist, in welcher Fasern aus einem vernetzten Polymeren in ungeregelter Verteilung angeordnet sind. Die auf einen herkömmlichen wärmeschrumpfbaren Gegenstand außenseitig aufgebrachte Schicht hat den wesentlichen Vorteil, daß sie sich beim Reckvorgang nach der Vernetzung wie die vernetzte Schicht verhält und den Reckvorgang, ohne Schaden zu nehmen, mitmacht. Sowohl bei dem Band aus einem thermoplastischen Kunststoff, in welchem die Partikel aus dem vernetzten Polymeren in gerecktem Zustand vorliegen als auch bei dem Gegenstand, bei dem eine Schicht aus einem vernetzten Polymeren mit einer Schicht aus einem Thermoplasten mit eingelagerter Partikeln aus dem vernetzten Polymeren versehen ist, richten sich die Fasern bzw. Partikel aus dem vernetzten Polymer überwiegend in Richtung der Reckkraft aus. Völlig überraschend hat sich gezeigt, daß die Fasern zusätzlich ebenfalls gereckt werden, obwohl sie sich in einer beim Reckvorgang erweichten Masse befinden. Dementsprechend bilden sie sich beim Schrumpferwärmen zurück und unterstützen dabei die Schrumpfwirkung der vernetzten Schicht.

Zusätzlich zu den Fasern können in der Schicht aus Thermoplast Fäden aus Glasfasern, Polyester, Polyamid oder einem vernetzten Polymeren quer zur Schrumpfrichtung in nahezu gleichem Abstand zueinander verlaufen. Diese hochfesten Fäden, die sich im Gegensatz zu den Fasern von einem Ende bis zum anderen Ende des Gegenstandes erstrecken, sollen dem wärmeschrumpfenden Gegenstand bei Schrumpftemperatur zusätzlich als mechanische Stütze dienen. Wesentlich ist aber, daß sie wie auch die Fasern, falls sich ein Riß in der vernetzten Schicht gebildet haben sollte, dessen Länge bzw. Tiefe begrenzen.

Als vernetztes Polymer wird vorteilhafterweise Polyethylen verwendet, welches chemisch vernetzt ist, und zwar zweckmäßigerweise ein Polyethylen, dem Silangruppen aufgepfropft sind und welches daher bei Anwesenheit von Feuchtigkeit vernetzbar ist.

Nach einer Weiterbildung der Erfindung ist die die Fasern enthaltende Schicht von einer Schicht aus thermoplastischem Kunststoff überdeckt. Bei einer solchen Anordnung besteht ein fester Verbund zwischen den einzelnen Schichten. Die weitere thermoplastische Schicht sorgt beim Schrumpferwärmen für eine Vergleichmäßigung der Oberflächentemperatur und hält Überhitzungen von der vernetzten Schicht ab.

Die Erfindung ist bei nahezu jeder Art von Schrumpfartikel anwendbar. Mit besonderem Vorteil ist sie jedoch bei sogenannten Manschetten einsetzbar.

Eine solche Manschette besteht aus einem Band aus vernetztem Polymer, mit an zwei einander gegenüberliegenden Kanten verlaufenden Stegen, über die nach dem Herumlegen der Manschette um das zu umhüllende Substrat eine Halteschiene geschoben wird, welche die Bandkanten beim Wärmeschrumpfen zusammenhält. Bei einer solchen Manschette befinden sich sowohl die die Fasern bzw. ggfs die Fäden enthaltende Schicht als auch die thermoplastische Deckschicht in dem Bereich zwischen den Stegen.

Für die Wirkung der Fasern ist wichtig, daß diese eine Länge von zwischen 0,5 und 50 mm vorzugsweise zwischen 10 und 35 mm aufweisen. Da die Fasern wie oben erwähnt beim Reckvorgang ebenfalls gereckt werden, sollte die Querschnittsfläche der Fasern mindestens 1 mm² betragen. Die Fasern werden zweckmäßigerweise aus Abfallmaterial abgespant, beispielsweise durch Fräsen oder Hobeln. Ihr Querschnitt ist daher im wesentlichen rechteckig. Die kleinste Seite dieser Rechtecke sollte einen Wert von 0,5 mm nicht unterschreiten. Die die Fasern und ggfs die Fäden aufnehmende Schicht besteht zweckmäßigerweise aus Ethylen-Vinylazetat-Copolymer.

Die Erfindung betrifft weiterhin ein Verfahren zur Herstellung eines wärmeschrumpfenden Gegenstandes. Bei diesem Verfahren wird zunächst ein aus einem vernetzbaren Polymeren und der die Fasern und ggf. die Fäden enthaltenden thermoplastischen Schicht bestehender Rohling hergestellt. Die vernetzbare Schicht des Rohlings wird dann vernetzt, und anschließend daran der Rohling über den Kristallitschmelzpunkt der vernetzten Schicht erwärmt, im erwärmten Zustand gereckt und im gereckten Zustand abgekühlt. Da beim Extrudieren der thermoplastischen Schicht die Gefahr besteht, daß die Fasern durch die in den Extruderschnecken auftretenden Scherkräfte zermahlen werden, hat es sich als sinnvoll erwiesen, die thermoplastische Schicht mit den eingebetteten Fasern als Band in den Extruder einlaufen zu lassen und die vernetzbare Schicht an das Band anzuextrudieren. Im gleichen Arbeitsgang kann auf das Band an der der vernetzbaren Schicht gegenüberliegenden Seite des Bandes eine thermoplastische Schicht aufextrudiert werden.

Das Band, welches in den Extruder einläuft, kann dadurch hergestellt werden, daß man zwei dünnwandige Bänder vorzugsweise aus einem thermoplastischen Kleber laminiert, wobei zwischen den Bändern die Fasern und ggfs auch die Fäden angeordnet werden. Zum Laminieren verwendet man zweckmäßigerweise ein beheiztes Walzenpaar, durch welches die Bänder unter gleichzeitiger Dickenabnahme hindurchgeführt werden. Andererseits besteht auch die Möglichkeit, auf ein Band vorzugsweise aus einem thermoplastischen Kleber die Fasern in ungleichmäßiger Verteilung aufzubringen und diese mittels eines beheizten Walzenpaares in eine der Oberflächen des Bandes einzuwalzen. Im gleichen Arbeitsgang können die Fäden in Längsrichtung des Bandes eingewalzt werden. Vorteilhaft ist es ferner, wenn die miteinander zu verbindenden Oberflächen der Bänder vor dem Laminieren aufgeheizt werden.

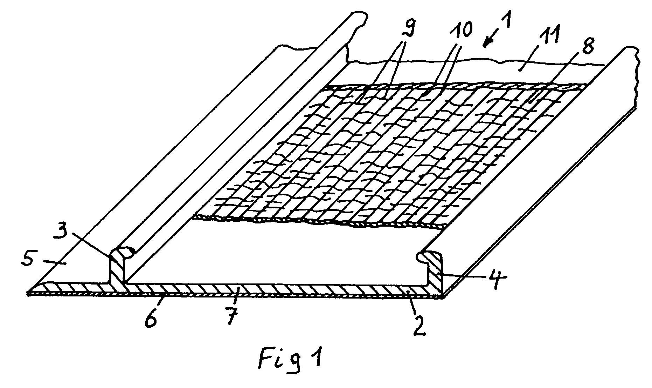

Die Erfindung ist an Hand der in den Figuren 1 bis 3 schematisch dargestellten Ausführungsbeispiele näher erläutert.

In der Figur 1 ist eine Manschette 1 im gereckten Zustand dargestellt, wie sie beispielsweise zum Umhüllen eines nicht dargestellten Kabelspleißes verwendet wird. Die Manschette 1 besteht im wesentlichen aus einem Band 2, mit an seinen Längskanten verlaufenden Stegen 3 und 4, über die nach dem Herumlegen um den Kabelspleiß in nicht dargestellter Weise eine Schiene geschoben wird um die Bandkanten des Bandes 2 in der zum Rohr geformten Lage während des Schrumpfprozesses zu halten. Das Band 2 weist noch eine Lasche 5 auf, welche nach dem Formen des Bandes 2 zum Rohr unter dem Steg 4 zu liegen kommt. Mit 6 ist noch eine Kleberschicht bezeichnet. Die bisher bekannten Manschetten bestehen aus vernetztem Polyethylen. Beim Schrumpferwärmen zeigten sich bei unsachgemäßer Handhabung z. B. infolge örtlicher Überhitzung der Manschette Risse in der Manschette, welche diese unbrauchbar machten.

Zur Verringerung der Rißneigung besteht die Manschette 1 nach der Lehre der Erfindung aus einem mehrschichtigen Aufbau. Die Lasche 5, die Stege 3 und 4 sowie der die Stege 3 und 4 miteinander verbindende Bereich 7 der Manschette 1 bestehen aus vernetztem Polyethylen, vorzugsweise aus einem Polyethylen, dem Silangruppen aufgepfropft sind und welches bei Anwesenheit von Feuchtigkeit vernetzt wurde. Auf dem zwischen den Stegen 3 und 4 befindlichen Bereich 7 der Manschette 1 ist eine Schicht 8 aus einem thermoplastischen Kleber vorteilhafterweise auf der Basis Ethylen-Vinyl-Azetat angeordnet. Eingebettet in der Schicht 8 ist eine Vielzahl von Fasern 9, welche aus einem vernetzten Polyethylen bestehen. Diese Fasern 9 sind aus Abfallmaterial hergestellt, welches bei der Herstellung von Schrumpfartikeln anfällt und welches, da es im Gegensatz zu unvernetztem Polyethylen nicht wieder aufzuarbeiten ist, bei der Entsorgung Probleme bereitet. Mit 10 sind Fäden aus einem bei Reck- bzw. Schrumpftemperatur mechanisch beständigem Werkstoff z. B. Polyamid, Polyester, Polyaramid o. ä. bezeichnet, welche in nahezu gleichem Abstand zueinander parallel zu den Stegen 3 und 4 verlaufen und sich im Gegensatz zu den Fasern 9 von einem Ende der Manschette 1 bis zu ihrem anderen Ende erstrecken. Die Fasern 9 die in der Schicht 8 vor dem Reckvorgang in unregelmäßiger Verteilung angeordnet waren, sind durch den Reckvorgang überwiegend in Reckrichtung ausgerichtet worden. Sie haben aber keine Verbindung mit den Fäden 10. Beim Reckvorgang werden auch die Fasern 9 gereckt, obwohl sie in der beim Reckvorgang ebenfalls erweichenden Schicht 8 angeordnet sind. Da nach dem Reckvorgang die Manschette 1 im gereckten Zustand abgekühlt wird, sind also auch die Fasern 9 wärmeschrumpfbar und unterstützen die Schrumpfwirkung der Schicht 7. Oberhalb der Schicht 8 ist noch eine Schicht 11 aus thermoplastischem Polyethylen angeordnet, die eine örtliche Überhitzung der Schicht 7 verhindert.

Sollte ein Riß an der Oberfläche der Manschette 1 auftreten, so wird sich dieser nur bis zur nächsten Faser 9 bzw. zum nächsten Faden 10 ausbreiten und durch die thermoplastische Schicht 11 überdecken lassen.

Die Fasern 9 haben zweckmäßigerweise eine Länge von 10 - 35 mm und einen Querschnitt von 1 bis 1,5 mm². Die Fasern 9 werden durch spanende Bearbeitung von Abfallmaterial aus vernetztem Polyethylen z. B. durch Fräsen oder Hobeln hergestellt. Herstellungsbedingt zeigen sie einen im wesentlich rechteckigen Querschnitt. Da die Fasern 9 wie oben beschrieben, beim Reckvorgang ebenfalls gereckt werden, sollte die kurze Seite des Rechtecks einen Wert von 0,2 mm nicht unterschreiten. Der Füllfaktor der Schicht 8 mit den Fasern beträgt zwischen 15 und 45 %, vorzugsweise 25 - 35 % bezogen auf das Volumen der Schicht 8. Die Fäden 10, zweckmäßigerweise verwendet man Polyesterfäden, haben einen Durchmesser von 0,05 - 0,2 mm und einen Abstand von in etwa 2 bis 4 mm zueinander.

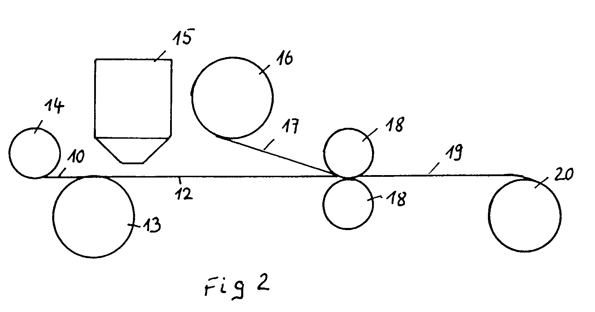

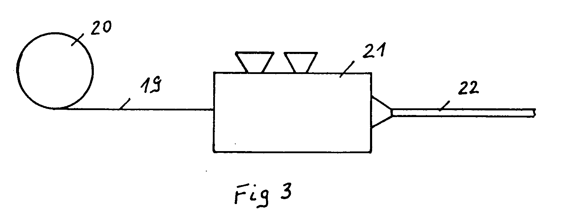

Neben den genannten Vorteilen ist die Manschette 1 sehr wirtschaftlich herstellbar. Dies soll an Hand eines Ausführungsbeispiels unter Einbeziehung der Figuren 2 und 3 näher erläutert werden.

Ein Band 12 aus einem thermoplastischen Kleber aus Ethyl-Vinylazetat-Copolymer wird von einem Vorratswickel 13 kontinuierlich abgezogen. Die Fäden 10 von denen der Deutlichkeit halber nur einer gezeichnet ist, werden von Vorratstrommeln 14 mit gleicher Geschwindigkeit abgezogen und auf die Oberfläche des Bandes 12 aufgelegt. Von einem Vorratsbehälter 15 werden die Fasern 9 in willkürlicher Verteilung auf die Oberfläche des Bandes 12 aufgebracht. Durch das von einem Vorratswickel 16 abgezogene Band 17, welches die gleiche Breite, Wanddicke und Zusammensetzung wie das Band 12 hat, wird das Band 12 bedeckt. Durch ein Walzenpaar 18 wird aus den Bändern 12 und 17 sowie den Fasern 9 und den Fäden 10 ein Laminatband 19 hergestellt, welches auf eine Vorratsspule 20 aufgewickelt wird. Das Laminieren des Bandes 19 erfolgt unter Druck und Wärme. Hierzu werden die Walzen des Walzenpaares 18 aufgeheizt. Alternativ besteht jedoch auch die Möglichkeit, die Oberfläche der Bänder 12 und 17 und/oder die Fasern 9 und die Fäden 10 vor dem Eintritt in den Walzspalt auf eine Temperatur zu erhöhen, welche oberhalb des Erweichungspunktes des thermoplastischen Klebers, jedoch unterhalb des Erweichungspunktes der Fasern 9 und der Fäden 10 liegt. Dies könnte z. B. durch Infraroterhitzung vorgenommen werden.

Das Laminatband 19 wird in einen Extruder 21 eingefahren, der das Laminatband 19 von beiden Seiten mit den Schichten 7 und 11 beschichtet. Die Schicht 7 wird aus einer Mischung erzeugt, die sich aus
50 Teilen Polyethylen
40 Teilen Ethylen-Vinylazetat-Copolymer
10 Teilen Ruß
zusammensetzt. Bei Eintritt in den Extruder 21 wird dieser Mischung 1 % Vernetzungsmittel auf Silanbasis zugegeben. Die Schicht 11 besteht aus nahezu reinem Polyethylen.

Das aus dem Mundstück des Extruders 21 austretende Verbundprofil 22 hat den Querschnitt der Manschette wie sie in Figur 1 dargestellt ist, wobei jedoch die Breite wesentlich geringer ist. Infolge der Extrusionstemperatur von ca. 210 °C entsteht eine innige Verbindung zwischen den Schichten 7, 8 und 11 untereinander.

Das Verbundprofil kann hinter dem Extruder in gewünschte Längen geschnitten werden oder aber aufgewickelt werden. Nach dem Extrudieren wird die Schicht 7 des Profils 22 bei Anwesenheit von Wasserdampf und bei einer Temperatur von 90 °C innerhalb einer Zeit von ca. 36 Stunden vernetzt.

Anschließend wird das Profil 22 auf eine Temperatur von ca. 170 °C erwärmt, bei dieser Temperatur um ca. 300 bis 400 % gereckt und zwar in Querrichtung zum Verlauf der Stege 3 und 4 und im gereckten Zustand abgekühlt.

Abschließend wird eine Schicht 6 aus einem Heißschmelzkleber aufgebracht und die gewünschte Länge von dem Profil 22 abgetrennt. Damit ist die Manschette 1 fertiggestellt und kann in Benutzung genommen werden.

## Patentansprüche

1. Wärmeschrumpfender Gegenstand zum Umhüllen eines Substrates, enthaltend Elemente aus einem vernetzten Polymeren, der durch Erwärmen des Gegenstandes über den Kristallitschmelzpunkt des vernetzten Polymeren, Recken bei dieser Temperatur und Abkühlen im gereckten Zustand hergestellt ist, dadurch gekennzeichnet, daß das vernetzte Polymer in Form von Partikeln (9) als Füllstoff in einer Schicht (8) aus einem thermoplastischen Kunststoff vorliegt.

2. Wärmeschrumpfender Gegenstand nach Anspruch 1, dadurch gekennzeichnet, daß in der thermoplastischen Schicht (8) Fäden (10) aus Glasfasern, Polyester, Polyamid oder einem vernetzten Polymeren quer zur Schrumpfrichtung in nahezu gleichen Abstand zueinander verlaufen und sich über die gesamte Länge des Gegenstandes erstrecken.

3. Wärmeschrumpfender Gegenstand zum Umhüllen eines Substrates, enthaltend Elemente aus einem vernetzten Polymeren, der durch Erwärmen des Gegenstandes über den Kristallitschmelzpunkt des vernetzten Polymeren, Recken bei dieser Temperatur und Abkühlen im gereckten Zustand hergestellt ist, dadurch gekennzeichnet, daß der Gegenstand (1) an seiner dem Substrat abgekehrten Oberfläche eine Schicht (8) aus einem Thermoplasten aufweist, in welcher Fasern (9) aus einem vernetzten Polymeren in ungeregelter Verteilung angeordnet sind.

4. Wärmeschrumpfender Gegenstand nach Anspruch 1 oder einem der darauffolgenden, dadurch gekennzeichnet, daß die die Fasern (9) enthaltende Schicht (8) von einer Schicht (11) aus einem thermoplastischen Kunststoff überdeckt ist.

5. Wärmeschrumpfender Gegenstand nach Anspruch 1 oder einem der darauffolgenden in Form eines Bandes mit an zwei einander gegenüberliegenden Randbereichen verlaufenden Stegen (3,4) zum Überschieben einer Schiene, die die Kanten nach dem Herumlegen um das Substrat zusammenhält, dadurch gekennzeichnet, daß sowohl die Schicht (8) aus dem Thermoplasten, welche die Fasern (9) enthält, als auch die Deckschicht (11) aus dem Thermoplasten lediglich zwischen den Stegen (3,4) angeordnet ist.

6. Wärmeschrumpfender Gegenstand nach Anspruch 1 oder einem der darauffolgenden, dadurch gekennzeichnet, daß die die Fasern (9) und ggfs. die Fäden (10) aufweisende Schicht (8) aus Ethylen-Vinylazetat-Copolymer besteht.

7. Verfahren zur Herstellung eines wärmeschrumpfenden Gegenstandes nach Anspruch 1 oder einem der darauffolgenden, dadurch gekennzeichnet, daß ein aus einem vernetzbaren Polymeren und der Schicht (8) oder den Schichten (8,11) aus Thermoplasten bestehender Rohling hergestellt wird, daß die vernetzbare Schicht (2) vernetzt wird, daß der Rohling über den Kristallitschmelzpunkt des vernetzten Polymers erwärmt, gereckt und in gerecktem Zustand abgekühlt wird.

## Claims

1. Heat-shrinkable article which is intended for enveloping a substrate, contains elements made of a crosslinked polymer and is produced by heating the article above the crystallite melting point of the crosslinked polymer, stretching it at this temperature and cooling it in the stretched state, characterized in that the crosslinked polymer is present in the form of particles (9) as filler in a layer (8) of a thermoplastic.

2. Heat-shrinkable article according to Claim 1, characterized in that, in the thermoplastic layer (8), filaments (10) of glass fibres, polyester, polyamide or a crosslinked polymer run transversely to the shrinkage direction, at virtually the same spacing from one another and extend over the entire length of the article.

3. Heat-shrinkable article which is intended for enveloping a substrate, contains elements made of crosslinked polymer and is produced by heating the article above the crystallite melting point of the crosslinked polymer, stretching it at this temperature and cooling it in the stretched state, characterized in that the article (1) has, on its surface facing away from the substrate, a layer (8) of thermoplastic in which fibres (9) of a crosslinked polymer are arranged irregularly distributed.

4. Heat-shrinkable article according to Claim 1 or one of the following claims, characterized in that the layer (8) containing the fibres (9) is covered by a layer (11) of a thermoplastic.

5. Heat-shrinkable article according to Claim 1 or one of the following claims in the form of a strip with webs (3, 4) running along two mutually opposite edge regions for sliding over a rail which holds the edges together after laying around the substrate, characterized in that both the layer (8) of the thermoplastic which contains the fibres (9) and the cover layer (11) of the thermoplastic is arranged only between the webs (3, 4).

6. Heat-shrinkable article according to Claim 1 or one of the following claims, characterized in that the layer (8) having the fibres (9) and, if appropriate, the filaments (10) consists of ethylene-vinyl acetate copolymer.

7. Process for producing a heat-shrinkable article according to Claim 1 or one of the following claims, characterized in that a blank is produced which consists of a crosslinkable polymer and of the layer (8) or the layers (8, 11) of thermoplastic, in that the crosslinkable layer (2) is crosslinked, in that the blank is heated above the crystallite melting point of the crosslinked polymer, is stretched and is cooled in the stretched state.

## Revendications

1. Objet rétractable à chaud pour envelopper un substrat, qui contient des éléments constitués d'un polymère réticulé et qui est fabriqué par chauffage de l'objet au-dessus du point de fusion des cristallites du polymère réticulé, étirage à cette température et refroidissement à l'état étiré, caractérisé par le fait que le polymère réticulé se présente sous forme de particules (9) servant de charge dans une couche (8) d'un produit thermoplastique.

2. Objet réticulable à chaud selon la revendication 1, caractérisé par le fait que dans la couche thermoplastique (8) des fils (10) de fibres de verre, de polyester, de polyamide ou d'un polymère réticulé courent, à distance égale l'un de l'autre, perpendiculairement à la direction du retrait et s'étendent sur toute la longueur de l'objet.

3. Objet rétractable à chaud pour envelopper un substrat, qui contient des éléments constitués d'un polymère réticulé et qui est fabriqué par chauffage de l'objet au-dessus du point de fusion des cristallites du polymère réticulé, étirage à cette température et refroidissement à l'état étiré, caractérisé par le fait que l'objet (1) présente, sur sa surface opposée au substrat, une couche (8) d'un produit thermoplastique dans lequel sont disposées, en distribution irrégulière, des fibres (9) constituées d'un polymère réticulé.

4. Objet rétractable à chaud selon la revendication 1 ou l'une des suivantes, caractérisé par le fait que la couche (8) contenant les fibres (9) est recouverte d'une couche (11) constituée d'un produit thermoplastique.

5. Objet rétractable à chaud selon la revendication 1 ou l'une des suivantes, sous forme d'un ruban présentant des nervures (3,4) courant sur deux zones de bordure opposées l'une à l'autre pour coulisser par-dessus un rail qui réunit les bords après mise en place autour du substrat, caractérisé par le fait qu'aussi bien la couche (8) de produit thermoplastique contenant les fibres (9) que la couche de couverture (11) de produit thermoplastique ne sont disposées qu'entre les nervures (3, 4).

6. Objet rétractable à chaud selon la revendication 1, ou l'une des suivantes, caractérisé par le fait que la couche (8) présentant les fibres (9) et éventuellement les fils (10) est constituée d'un copolymère éthylène-acétate de vinyle.

7. Procédé de fabrication d'un objet rétractable à chaud selon la revendication 1 ou l'une des suivantes, caractérisé par le fait que l'on fabrique une ébauche constituée d'un polymère réticulable et de la couche (8) ou des couches (8,11) en matériau thermoplastique, que l'on fait réticuler la couche réticulable (2), que l'on chauffe l'ébauche au-dessus du point de fusion des cristallites du polymère réticulé, qu'on l'étire et qu'on la refroidit à l'état étiré.
